# EUROPEAN PATENT APPLICATION

(11) **EP 2 746 084 A1**
(43) Date of publication of application: **25.06.2014**
(21) Application number: 12824328.4
(22) Date of filing: 15.08.2012
(51) Int. Cl.: B60K 6/46, B60W 10/00, B60W 10/06, B60W 10/08, B60W 20/00

(54) **WORK VEHICLE**

(30) Priority: 16.08.2011 JP 2011178151
(71) Applicant: Hitachi Construction Machinery Co., Ltd., Bunkyo-ku Tokyo 112-8563 (JP)
(72) Inventor: KANEKO Satoru, Tokyo 100-8280 (JP); IKIMI Takashi, Tokyo 100-820 (JP); MORIKI Hidekazu, Tokyo 100-820 (JP); ITO Noritaka, Tsuchiura-shi Ibaraki 300-0013 (JP); MORITA Yuichiro, Tsuchiura-shi Ibaraki 300-0013 (JP)
(74) Representative: MERH-IP Matias Erny Reichl Hoffmann
(86) International application number: PCT/JP2012/070749
(87) International publication number: WO 2013/024869

(57) **Abstract**

There are provided an electric storage device (11), inverter devices (7, 10), a converter device (12) for converting the voltage of circuits to which the inverter devices (7, 10) are connected, a motor generator (6) for driving a hydraulic pump (4) using alternate current from the inverter device (7), a motor (9) for driving wheels (61) using alternate current from the inverter device (10), and a control device (200) for controlling the inverter devices (7, 10). When any of the devices necessary for supplying the current to the motor (9) has developed a failure, the control device (200) drives the motor (9) by getting another normal device to perform another process corresponding to the process that has been performed by the malfunctioned device before the failure. This makes it possible to continue travel movement even when part of a travel power supply system has developed a failure.

## Description

### Technical Field

The present invention relates to a hybrid work vehicle equipped with an engine and an electric storage device as a power source.

### Background Art

The environmental problems and rising crude oil price in recent years have been leading to an increase in a preference for more energy-efficient industrial products. The same trend is in the field of construction vehicles and work vehicles which mostly operate on the hydraulically-driven system using a diesel engine as in growing cases of the more efficient and energy-saving vehicles through electrification. For example, where the above-mentioned construction vehicles or work vehicles have their drive components electrified, i.e., use an electric motor as the drive source, many energy-saving effects are expected, such as reduced exhaust gas emissions, enhanced drive efficiency of the engine (of hybrid models), increased power transmission efficiency, and recovery of regenerated electrical power. In the above-mentioned field of construction vehicles and work vehicles, electrification of forklifts has been most advanced, and especially, what is called a battery forklift, which uses electrical power from battery for driving the motor, has been in practice ahead of other vehicles. This type of forklift has been growingly accepted, particularly in the category of small-sized forklifts. Recently the trend has been followed by a move to start commercializing "hybrid vehicles" that combine a diesel engine with an electrical motor in such categories as hydraulic excavators and engine-powered forklifts.

Among these construction vehicles and work vehicles becoming more environmentally friendly and energy-efficient through electrification, wheel loaders are expected to provide a comparatively large reduction in fuel consumption when the vehicles adopt a hybrid structure. The conventional wheel loader is typically a work vehicle which travels by having an onboard engine transmit its power to the wheels via a torque converter and a transmission (T/M) and which has a work device attached to the vehicle front and acting to excavate and carry gravel or the like. When the travel drive components of this type of wheel loader are electrified, the mechanical efficiency of power transmission with the torque converter and the transmission can be raised to a level comparable to that of the efficiency of electrical power transmission. Furthermore, since the wheel loader frequently starts and stops while traveling during work, when the travel drive components of the vehicle are electrified, regenerative power is expected to be recovered from its electrical motor for traveling upon braking.

One type of hybrid wheel loader is called a series hybrid system having electrified traveling components. This type of system has its traveling unit completely electrified so that when any part of a system that supplies electrical power (i.e., traveling power supply system) to a traveling electrical motor as the drive source of the traveling unit develops a breakdown or other failure, the traveling unit may not be able to travel thereafter. Work vehicles such as wheel loaders equipped with wheels may travel on public roads or inside a work site and can be stranded wherever they are in case of a failure of the system. Thus, what is desired is a function to let the vehicle travel continuously even when part of the traveling power supply system has developed a failure.

One method of emergency operation in the event of such a breakdown is disclosed in JP-2010-133235-A for example. According to the disclosed technique, when a failure is detected in the control system of a motor generator (M/G) or of electrical work elements (such as swing motor) on a hybrid construction machine, a step-up/step-down converter (DCDC converter) is used to continue step-up/step-down control over the DC bus. This makes continuous drive possible using a normal electric storage system even when the control system of the motor generator (M/G) or of electrical work elements breaks down.

### Prior Art Literature

### Patent Document

Patent Document 1: JP-2010-133235-A

### Summary of the Invention

### Problems to be Solved by the Invention

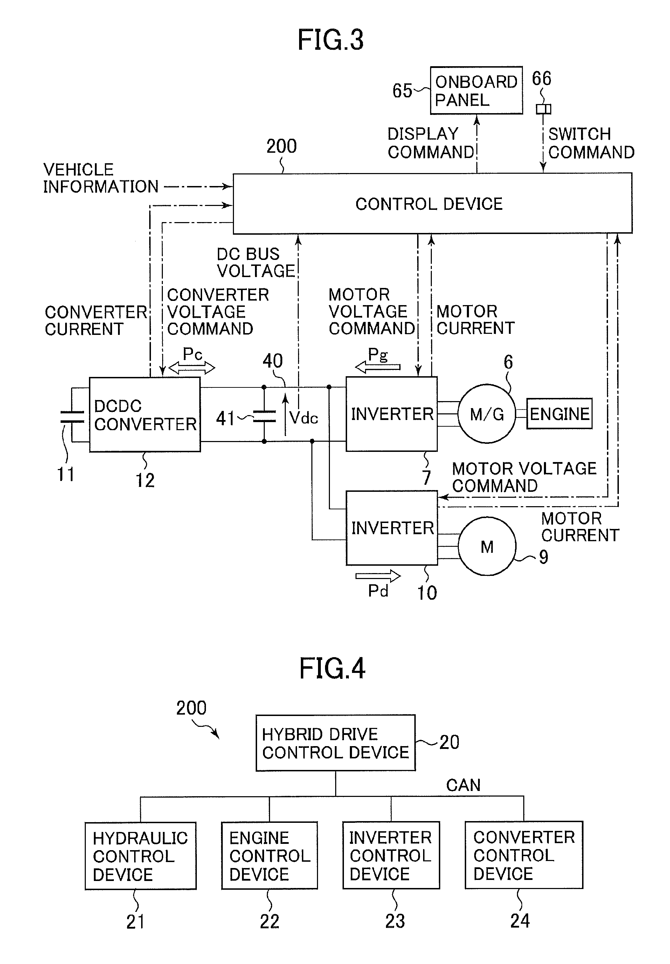

According to the above-mentioned technique, when the control system of the motor generator or electrical work elements has a failure, the power of a normal electric storage system is used to continue driving the electrical work unit. With this technique, when the electric storage device shown in Fig. 3 is a capacitor smaller in capacity than the onboard battery, or when not the power generation system but the electric storage system breaks down, then it may not be possible to operate the vehicle.

It is therefore an object of the present invention to provide a work vehicle which has its travel drive unit electrified and which can continue traveling even when part of its traveling power supply system has developed a failure. Means for Solving the Problem

In achieving the above object of the present invention and according to the invention, there is provided a work vehicle including: an engine; a hydraulic pump which is driven by the engine and which drives hydraulic actuators; an electric storage device which stores direct current power; a first and second inverter devices which convert direct current to alternate current; a converter device which converts the voltage of circuits to which the first and second inverter devices are connected; a motor generator which generates drive torque of the hydraulic pump using the alternative current from the first inverter device; a motor which generates drive torque of the vehicle using the alternate current from the second inverter device; and a control device which controls the first and second inverter devices. When any of these devices connected to the circuits and necessary for supplying current to the motor has failure, the control device causes a normal one of the devices to perform the same process as, or a process corresponding to, a process that has been carried out by the device with the failure prior to the occurrence of the failure, so that the motor is driven via the second inverter device.

### Effects of the Invention

According to the present invention, even when the traveling power supply system of the work vehicle of which the traveling unit is electrified has a failure, the work vehicle can travel to a safe location without being stranded on the spot where the failure has occurred.

### Brief Description of the Drawings

Fig. 1 is a system configuration diagram of a hybrid wheel loader involved in an embodiment of the present invention.
Fig. 2 is an illustration depicting a typical structure of a prior-art wheel loader.
Fig. 3 is a configuration diagram of a traveling power supply system involved in an embodiment of the present invention.
Fig. 4 is a configuration diagram of a control device 200 involved in an embodiment of the present invention.
Fig. 5 is an illustration depicting a structure of an emergency operation management unit 30 involved in an embodiment of the present invention.
Fig. 6 is a block diagram depicting the process of controlling an inverter device 7 (motor generator 6) performed by an inverter control device 23 involved in a first embodiment of the present invention.
Fig. 7 is a block diagram depicting the process of controlling an inverter device 10 (traveling motor 9) performed by the inverter control device 23 involved in the first embodiment.
Fig. 8 is a flowchart of the process performed upon transition from a first drive method to a second drive method of the wheel loader involved in the first embodiment.
Fig. 9 is a flowchart of the process performed upon transition from the first drive method to the second drive method of the wheel loader involved in a variation of the first embodiment.
Fig. 10 is a block diagram of the process of controlling a DCDC converter device 12 performed by a converter control device 24 involved in a second embodiment of the present invention.
Fig. 11 is a flowchart of the process performed upon transition from the first drive method to the second drive method of the wheel loader involved in the second embodiment.
Fig. 12 is a flowchart of the process performed upon transition from the first drive method to the second drive method of the wheel loader involved in another variation of the first embodiment.

### Modes for Carrying out the Invention

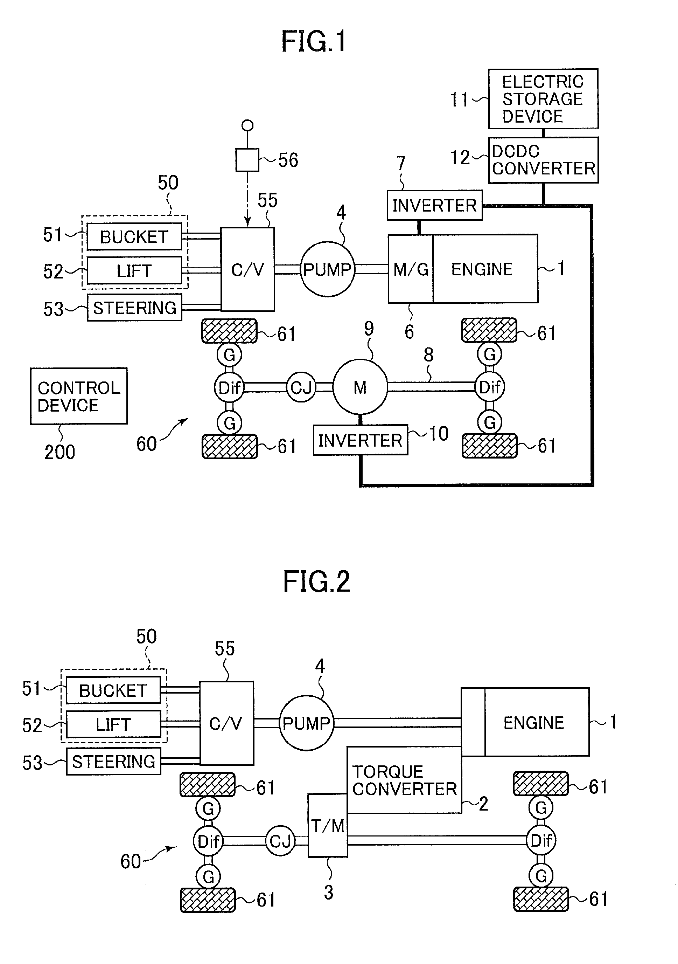

Some embodiments of the present invention are explained below in reference to the accompanying drawings. Fig. 1 is a system configuration diagram of a hybrid wheel loader involved in an embodiment of the present invention.

The wheel loader depicted in Fig. 1 includes a work device 50 which has a bucket and a lift arm (not shown) and which is attached to the front of the vehicle; a diesel engine (internal combustion) 1; a hydraulic pump 4 which is driven by the engine 1 and which drives hydraulic actuators (bucket cylinder 51, lift cylinder 52, and steering cylinder 53); a control valve 55 which controls a hydraulic fluid supplied from the hydraulic pump 4 to the hydraulic actuators 51, 52 and 53; an electric storage device 11 which stores DC (direct current) power; inverter devices 7 and 11 which perform DC to AC (alternate current) conversion; a DCDC converter device 12 which converts the voltage of electric circuits to which the inverters 7 and 11 are connected (i.e., DC bus voltage between the inverter devices 7 and 11); a motor generator (M/G) 6 which assists the engine 1 by generating drive torque of the hydraulic pump 4 using the AC from the inverter device 7; a traveling motor 9 which generates drive torque of the vehicle (track structure 60) using the AC from the inverter device 11; operating devices {operation lever 56 and steering wheel (not shown)} which output operation signals for driving the hydraulic actuators 51, 52 and 53; and a control device 200 which controls the inverter devices 7 and 11, converter device 12, etc.

The motor generator 6 is further connected with the engine 1 and acts as a generator when driven by the engine. The power generated by the motor generator 6 is supplied to the traveling motor 6 or stored into the electric storage device 11. The switchover between powering operation (engine assist) and generating operation of the motor generator 6 is performed by the control device 200 in keeping with the load on the engine 1.

The track structure 60 has four wheels 61 suitably mounted on a propeller shaft 8 via a differential gear (Dif) and a final gear (G). The wheels 61 are each driven rotatively by the drive torque of the traveling motor 9 axially mounted on the propeller shaft 8.

The bucket cylinder 51 and lift cylinder 52 are driven in accordance with operation signals (hydraulic signals) output in proportion to the amount of operation of the operation lever 56 installed in the cab. The lift cylinder 52 is attached to a lift arm fixed rotatably to the vehicle front, and based on the operation signal from the operation lever 56 extends and contracts to swing the lift arm up and down. The bucket cylinder 51 is attached to the bucket fixed rotatably to the tip of the lift arm, and based on the operation signal from the operation lever 56 extends and contracts to swing the bucket up and down. The steering cylinder 53 is driven by the operation signal (hydraulic signal) output in keeping with the amount of steering of the steering wheel (not shown) installed in the cab. The steering cylinder 53 is coupled to each of the wheels 61, and based on the operation signal from the steering wheel extends and contracts to change the steering angle of the wheels 61.

The electric storage device 11 is electrically connected to the inverter devices 7 and 11 via the DCDC converter device 12 and is structured to exchange DC power with the inverter devices 7 and 11. Although the electric storage device 11 is not specifically limited in type as long as it permits high-speed input and output of relatively large power, the device 11 may preferably be a secondary battery such as a lithium ion battery or a large-capacity electric double layer capacitor. Thus, it is assumed here for purpose of explanation that the electric storage device 11 is a large-capacity electric double layer capacitor.

The hybrid wheel loader structured as described above performs work in accordance with a purpose by having the hydraulic pump 4 supplying suitable hydraulic pressure to the work device 50 for excavating gravel or the like. Also, the track structure 60 travels, with the electric storage device 11 and DCDC converter device 12 controlling a system voltage (DC bus voltage between the inverters 7 and 11) to a predetermined level, by the motor generator 6 being driven principally by the engine 1 to generate power for driving the traveling motor 9. In this case, the electric storage device 11 contributes to reducing energy consumption of the vehicle by absorbing power regenerated by the traveling motor 9 during braking of the vehicle or by assisting the engine 1 in its output by supplying stored power to the motor generator 6 or to the traveling motor 9.

The hybrid system to which the present invention applies is not limited to the structure in Fig. 1. The present invention may also be applied to diverse system configurations including a traveling unit parallel type.

Fig. 2 is an illustration depicting a typical structure of a prior-art wheel loader. The same components as those in Fig. 1 are given the same reference numerals, and their explanations are omitted (the same will apply to all subsequent drawings). The prior-art wheel loader depicted in Fig. 2 has a track structure 60 and a work device 50 (lift and bucket components) as the principal drive components. The power of the engine 1 is transmitted to the wheels 61 for traveling via a torque converter 2 and a transmission (T/M) 3. The work device 50 driven by a hydraulic pump 4 further excavates or carries gravel or the like. Since the mechanical efficiency of power transmission with the torque converter is less than the efficiency of electrical power transmission, if the travel drive components of the wheel loader depicted in Fig. 2 are electrified (including a parallel hybrid structure), it will be possible to improve the mechanical efficiency of power transmission from the engine. In addition, because the wheel loader frequently starts and stops while traveling during work, if the travel drive components of the vehicle are electrified as described above, regenerative power is expected to be recovered from the traveling motor 9 upon braking. Where the drive device of the wheel loader is partially electrified in a hybrid structure, the amount of fuel consumption can be reduced by as much as several tens of percent.

The wheel loader embodying the present invention is equipped with a traveling power supply system made up of various devices necessary for supplying a current to the traveling motor 9. The devices constituting the system are connected to electric circuits to which is connected the inverter device 10 for controlling the traveling motor 9. In the example depicted in Fig. 1, the electric storage device 11, DCDC converter 12, motor generator 6, and inverter device 7 correspond to these devices making up the system.

Fig. 3 is a configuration diagram of a traveling power supply system involved in an embodiment of the present invention. The traveling power supply system depicted in Fig. 3 includes the electric storage device 11, DCDC converter 12, inverter device 7 for controlling the motor generator 6, inverter device 10 for controlling the traveling motor 9, and a smoothing capacitor 41. These components are suitably interconnected via a DC bus 40.

The control device 200 is connected to the electric storage device 11, DCDC converter device 12, inverter device 7, inverter device 10, an onboard panel (display device) 65, and an emergency operation switch 66.

The display panel 65 displays status of each of the devices making up the traveling power supply system (i.e., the panel displays whether any of them has developed a failure), and is installed inside the cab of the wheel loader. The emergency operation switch 66 is a device (designation device) which designates whether to permit an emergency operation (to be discussed later) by the control device 200 and which is installed inside the wheel loader cab.

The DCDC converter device 12 inputs a converter current to the control device 200, and the control device 20 inputs a converter voltage command to the DCDC converter device 12. The inverter device 7 inputs a current value of the motor generator 6 (motor current) to the control device 200, and the control device 200 inputs a voltage command for the motor generator 6 (motor voltage command) to the inverter device 7. The inverter device 1 inputs a current value of the traveling motor 9 (motor current) to the control device 200, and the control device 200 inputs a voltage command for the traveling motor 9 (motor voltage command) to the inverter device 10. A detector (not shown) attached to the DC bus 40 inputs the voltage of the DC bus 40 (Vdc) to the control device 200. The control device 200 inputs display commands to the onboard panel 65, and the emergency operation switch 66 inputs a switch command to the control device 200.

What is further input to the control device 200 includes the torque and revolution speed of the motor generator 6 and traveling motor 9, vehicle information such as vehicle speed and the amount of operations of the operation lever 56 and pedals (not shown) operated by the operator, and the current and voltage values of the electric storage device 11. The control device 200 has a function to calculate torque commands destined for the motor generator 6 and traveling motor 9 based on the diverse input signals mentioned above.

In the traveling power supply system structured as described above, when none of the devices constituting the system has developed a failure, the current from the motor generator 6 or the electric storage device 11 is supplied to the traveling motor 9 via the inverter device 10 while the electric storage device 11 and DCDC converter device 12 control the system voltage (DC bus voltage between the inverters 7 and 10) to a predetermined value. The traveling motor 6 is driven in this manner. In the ensuing description, the method by which the traveling motor 6 is driven as described above may be referred to as the first drive method.

Fig. 4 is a configuration diagram of the control device 200 involved in an embodiment of the present invention. As depicted in Fig. 4, the control device 200 mounted on the wheel loader (vehicle) embodying the present invention includes a hybrid control device 20 as the controller for controlling flows such as the energy flow and power flow of the entire hybrid system shown in Fig. 1, a hydraulic control device 21 that controls the control valve (C/V) 55 and hydraulic pump 4, an engine control device 22 that controls the engine 1, an inverter control device 23 that controls the inverter devices 7 and 10, and a converter control device 24 that controls the DCDC converter device 12.

The control devices 20, 21, 22, 23 and 24 are each equipped with a storage device (such as RAM and ROM) (not shown) that stores processed details and results, and a processing device (such as CPU) (not shown) that performs processes stored in that storage device. In addition, the control devices 20, 21, 22, 23 and 24 are interconnected via a CAN (Controller Area Network) and exchange device command values and state quantities with one another. As shown in Fig. 4, the hybrid control device 20 is positioned hierarchically above the controllers composed of the hydraulic control device 21, engine control device 22, inverter control device 23, and converter control device 24 for control over the entire system. The hybrid control device 20 issues a command for specific operations to the other control devices 21 through 24 so that the system as a whole can provide the highest work performance.

The control devices 20 through 24 shown in Fig. 4 are only the controllers necessary for controlling the drive components of the hybrid system depicted in Fig. 1. To actually practice the vehicle requires installing other monitors and information-related controllers, which are not shown. Also, the control devices 20 through 24 need not be entities separate from one another as depicted in Fig. 4. One control device may incorporate the function of two or more control devices.

The wheel loader targeted by the present invention has a number of basic operation patterns. In accordance with each of these operation patterns, the hybrid control device 20 allows the vehicle to operate in an optimal fashion. For example, the most representative work pattern of the vehicle is V-cycle excavation work. The V-cycle excavation work is a major operation pattern that takes up about more than 70 percent of the entire work actually performed by the wheel loader. With this pattern, the wheel loader first advances toward the excavation target such as a gravel mound and thrusts the bucket into the target mound to scoop gravel or the like to be carried away. Thereafter, the wheel loader moves backwards to the initial position and, with the steering wheel suitably operated and with the lift arm and bucket raised, advances toward a transport vehicle such as a dump truck. The wheel loader then dumps the content of the bucket onto the transport vehicle (i.e., releases the gravel), before backing up again to reach the initial position. In this manner, the vehicle repeats the work while plotting a V-shaped locus. When this operation is to be performed by the wheel loader shown in Fig. 1, the hybrid control device 20 distributes the output from the engine 1 and from the electric storage device 11 to the work device 50 and traveling motor 9 in a manner that minimizes fuel consumption and maximizes work efficiency of the entire hybrid system.

In addition to performing the V-cycle excavation work as one of the basic work patterns, the wheel loader is designed to travel on public roads to move from one work site to another. One function required of the wheel loader in common for traveling on public roads and doing V-cycle excavation work is an emergency operation function. What is involved in the emergency operation is that even when a partial breakdown of the system disables its principal function, the remaining normal components of the system are mobilized to continue a minimally required operation of the vehicle.

For example, suppose that the vehicle breaks down in the traveling power supply system while traveling on a public road, and the breakdown has disrupted the supply of power to the traveling motor and rendered the vehicle incapable of traveling any further. In such a case, the vehicle must be moved to a safe location as soon as possible. If the vehicle is stranded in the middle of a traffic intersection or on a railroad crossing, moving the vehicle to safety is all the more important. Another case is if the traveling power supply system breaks down during V-cycle excavation work and renders the vehicle incapable of traveling at a work site, a stranded vehicle can halt the whole excavation work. The vehicle will need to be moved to a location where it will not hamper the ongoing work. In these cases, the above-mentioned emergency operation function becomes necessary. However, prior-art control functions of ordinary wheel loaders including hybrid wheel loaders traveling off the traveling motor have been incapable of allowing the vehicle to continue traveling when part of the traveling power supply system has broken down.

In view of the above circumstances, the present invention proposes providing an emergency operation management unit 30 (emergency operation management means) inside the control device 200. This allows the control device 200 involved in this embodiment to incorporate another method for driving the traveling motor 6, i.e., a method (second drive method) for use when any of the devices making up the traveling power supply system has a failure in addition to the method (first drive method) used when none of the devices constituting the system has developed a failure (during normal time). Since the hybrid drive control device 20 is situated in terms of control above a control device group (made up of the control devices 21, 22, 23 and 24) for controlling the drive components of the hybrid system, the control device 20 can comprehensively grasp the status of each of the drive components. When any of the devices making up the traveling power supply system has a failure, the hybrid drive control device 20 permits transition to an emergency operation with a suitable configuration. Although what is explained here is the case in which the emergency operation management unit 30 is incorporated in the hybrid drive control device 20, the management unit 30 may alternatively be installed in the control device 200 independently of the other control devices 20, 21, 22, 23 and 24.

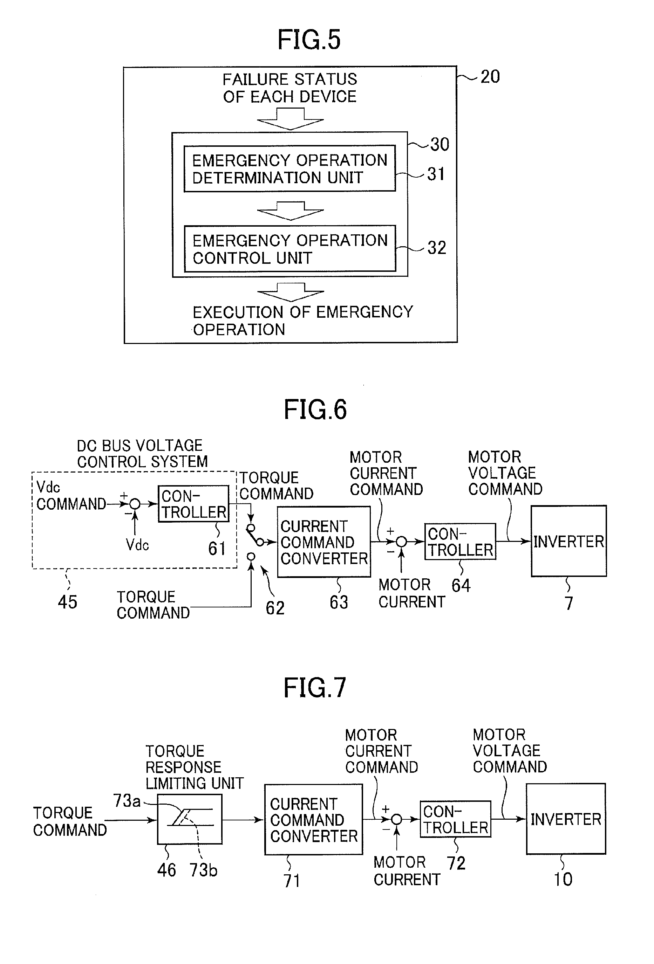

Fig. 5 is an illustration depicting a structure of the emergency operation management unit 30 involved in an embodiment of the present invention. The emergency operation management unit 30 shown in Fig. 5 includes an emergency operation determination unit 31 and an emergency operation control unit 32.

The emergency operation determination unit 31 is a unit which determines whether any of the devices making up the traveling power supply system has developed a failure and which, if any of the devices is found to have a failure, determines whether the execution of an emergency operation is possible by excluding the device with a failure. Whether the failure has occurred is determined based on failure status information input from each of the control devices controlling the devices constituting the traveling power supply system.

The emergency operation control unit 32 is a unit which, if the emergency operation determination unit 31 has determined that the execution of an emergency operation is possible, allows some other normal device to carry out the same process as, or another process corresponding to, the process that was performed by the device with a failure. This allows the normal devices making up the traveling power supply system to supply a current to the traveling motor 9, causing the emergency operation to be carried out. In this manner, even if some of the devices constituting the traveling power supply system contain a breakdown or other failure, a configuration excluding the device with the failure ensures the supply of power to the traveling motor 9 and permits the work vehicle to travel on to a safety. That is, a specific control process performed by the emergency operation monitoring unit 30 is set for each of the devices with a failure. These control processes will be explained below in connection with embodiments of this invention.

The first embodiment of the present invention is now explained below. The ensuing paragraphs will discuss the emergency operation to be performed when the electric storage device 11 or DCDC converter device 12 of the traveling power supply system has developed a failure.

The power supply system depicted in Fig. 3 is the most important subsystem in the hybrid system that determines vehicle performance. Using as its principal power the power Pg generated by the motor generator 6 driven by the engine 1, the power supply system feeds power Pd to the traveling motor 9 to drive the vehicle. Also, the DC bus 40 connects the inverter device 7 for the motor generator 6 with the inverter device 10 for the traveling motor 9 solely via the smoothing capacitor 41. For these reasons, when there occurs a slight power difference ΔP between the power Pg and the power Pd, the voltage on the DC bus 40 wildly fluctuates, which can make it difficult to drive the vehicle with the traveling motor 9 thereafter. Thus, the DCDC converter 1 connected in parallel with the DC bus 40 is used to control the voltage on the DC bus 40 with good responsiveness. In this case, the electric storage device 11 serves as the power source for the DCDC converter device 12. Using the power from the electric storage device 11, the DCDC converter 12 suppresses the power difference ΔP on the DC bus 40 (i.e., voltage fluctuation on the DC bus 40).

The DCDC converter device 12 and electric storage device 11 make up an important part of an electric drive system that not only suppresses the voltage fluctuation on the DC bus 40 but also provides functions specific to a hybrid vehicle such as the recovery of power regenerated by the traveling motor 9 upon braking and the assistance of the engine 1 in case of power deficiency. It follows that if the DCDC converter 11 or electric storage device 11 has broken down, it will be difficult for the vehicle to continue traveling thereafter. If such a breakdown occurs when the vehicle is on a public road or at a work site, for example, the vehicle needs to be moved to a safe location as soon as possible with the emergency operation function needed in the event of an electric drive system breakdown. Explained below for the most part is the case in which the vehicle is allowed to travel continuously with limited function and minimum performance in an emergency operation upon failure as opposed to traveling with full performance during normal time.

Fig. 6 is a block diagram depicting the process of controlling the inverter device 7 (motor generator 6) performed by the inverter control device 23 involved in the first embodiment of the present invention. The position to which a switch 62 is set is changed depending on whether or not the electric storage device 11 or converter device 12 has developed a failure (i.e., depending on which drive method is being used). Fig. 6 shows the state in which one of these devices has a failure and the second drive method is used accordingly.

As shown in Fig. 6, when the first drive method is used for drive control on the traveling motor 9 (during normal time), the inverter control device 23 controls the inverter device 7 in accordance with the route depicted in the lower part of Fig. 6. That is, the inverter control device 23 causes a current converter 63 to convert a torque command input from the high-order hybrid drive control device 20 into a current command for the motor generator 6 and allows a controller 64 to generate a voltage command for the motor generator 6 (motor voltage command) based on the current command in question. Besides the current command, an actual measured motor current value is input to the controller 64 involved in this embodiment to implement feedback control for generating a voltage command for bringing the difference between the current command value and the actual measured value close to zero.

By contrast, when the second drive method is being used (i.e., when the electric storage device 11 or inverter device 12 has a failure), a DC bus voltage control system 45 is added to perform the voltage conversion process that was executed by the converter device 12 during normal time, as indicated by the route shown in the upper part of Fig. 6. That is, a controller 61 of the DC bus voltage control system 45 generates a torque command based on a DC bus voltage command (Vdc command) input from the hybrid drive control device 20 and outputs the generated torque command to the current command converter 63. Besides the Vdc command, an actual measured DC bus voltage value (Vdc) is input to the controller 61 involved in this embodiment to implement feedback control for generating a torque command for bringing the difference between the DC bus voltage command value and the actual measured value close to zero. The processes downstream of the current command converter 63 are the same as those performed according to the first drive method.

Fig. 7 is a block diagram depicting the process of controlling the inverter device 10 (traveling motor 9) performed by the inverter control device 23 involved in the first embodiment.

The block diagram of Fig. 7 includes a torque response limiting unit 46. Where the second drive method is used, the torque response limiting unit 46 limits torque responsiveness to a level lower than when the first drive method is in use (i.e., when the power of the electric storage device 11 is mainly used to drive the traveling motor 9 to start a stationary vehicle). That is, with the second drive method in effect, the torque response speed of the traveling motor 9 is made lower than when the first drive method is used. The reason for this is that whereas the power of the electric storage device 11 with good torque responsiveness is generally used to start the vehicle from its stationary state as long as the electric storage device 11 and DCDC converter device 12 are normal, when any of these devices has developed a failure, the power generated by the motor generator 6 driven by the engine 1 with inferior output responsiveness is needed to start the vehicle. A solid line 73a in a graph shown within the torque response limiting unit 46 in Fig. 7 denotes one example of torque responsiveness according to the first drive method, and a broken line 73b also shown therein represents one example of torque responsiveness according to the second drive method.

With the second drive method in use, the torque response speed should preferably be set to approach the output response speed of the engine 1. Whereas the power obtained by the engine 1 driving the motor generator 6 is used to drive the traveling motor 9 when the second drive method is in effect, the output responsiveness of the motor generator 6 in this case is dependent on the output responsiveness of the engine 1. Thus, it is preferred that the torque command for the traveling motor 9 be made likewise to approach the output responsiveness of the engine 1.

As depicted in Fig. 7, the inverter control device 23 causes the torque response limiting unit 46 to lower the torque command input from the high-order hybrid drive control device 20 for the traveling motor 9 to a predetermined value that is output to a current command converter 71. In turn, the current command converter 71 converts the torque command in question into a current command. Based on the current command, a controller 72 generates a voltage command for the traveling motor 9 (motor voltage command). Besides the current command, an actual measured motor current value is input to the controller 72 involved in this embodiment to implement feedback control for generating a voltage command that brings the difference between the current command value and the actual measured value close to zero.

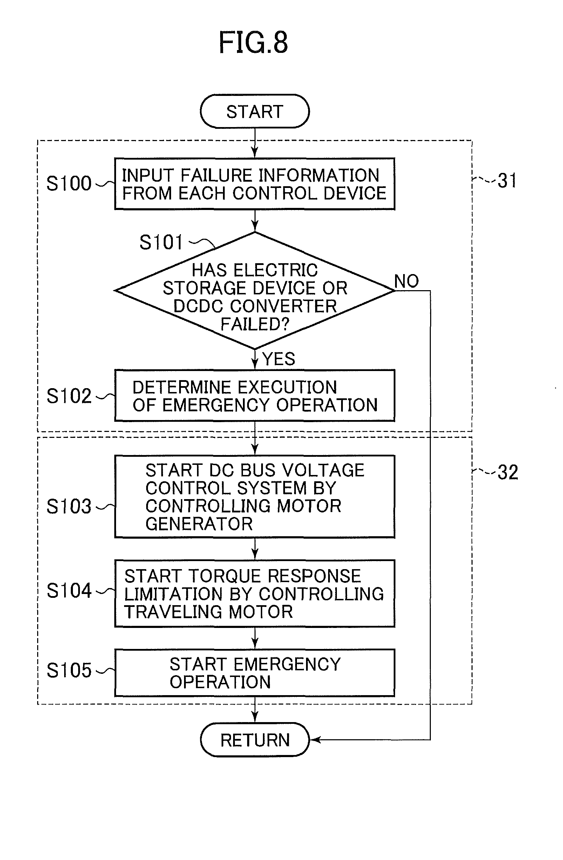

Fig. 8 a flowchart of the process performed upon transition from the first drive method to the second drive method of the wheel loader involved in the first embodiment.

The steps shown in Fig. 8 are each carried out by the emergency operation management unit 30. When the process shown in Fig. 8 starts, the emergency operation determination unit 31 inputs failure information about the devices constituting the traveling power supply system from the control devices 21, 22, 23 and 24 (S100). Based on the failure information input in S100, it is determined whether the electric storage device 11 or DCDC converter device 12 has developed a failure (S101). When it is determined in S101 that the devices 11 and 12 are normal, the process goes back to S100 to be repeated until a failure is detected. When it is determined in S101 that the device 11 or 12 has developed a failure, the execution of an emergency operation is determined (S101). The process ranging from S100 to S102 is carried out by the emergency operation determination unit 31.

Upon completion of processing S102, step S103 and the subsequent steps are carried out by the emergency operation control unit 32. First, in conjunction with the process of controlling the motor generator 6 performed by the inverter control device 23, the emergency operation control unit 32 starts the DC bus voltage control system 45 (see Fig. 6)(S103). This causes the inverter device 7 to perform the process corresponding to the voltage conversion process that has been carried out by the DCDC converter device 12 according to the first drive method. This allows the power generated by the motor generator 6 driven by the engine 1 to be supplied to the inverter device 10 via the DC bus 40.

Furthermore, in conjunction with the process of controlling the traveling motor 9 performed by the inverter control device 23, the emergency operation control unit 32 causes the torque response limiting unit 46 (see Fig. 7) to select the torque responsiveness indicated by the broken line 73b (S104). Upon completion of S104, the emergency operation is started (S105). This makes it possible to limit the torque responsiveness of the traveling motor 9 more than when the first drive method is in use, whereby the torque responsiveness of the traveling motor 9 may be brought closer to the output responsiveness of the engine 1. Upon completion of S105, the process goes back to S100 to repeat the subsequent steps.

According to this embodiment as discussed above, even when the electric storage device 11 or DCDC converter device 12 has developed a failure, the emergency operation management unit 30 enables a normal control system of the motor generator 6 to start the DC bus voltage control system 45 and also permits the torque responsiveness of the traveling motor 9 to approach the output responsiveness of the engine 1. This allows the wheel loader to travel continuously. Unlike the second embodiment to be discussed later, the first embodiment only needs to limit the torque responsiveness of the traveling motor 9 because the amount of output necessary for traveling can be supplied from the engine 1 (motor generator 6).

The above-described wheel loader is a vehicle that not only travels driven by the traveling motor 9 but also performs work using the work device 50 attached to the vehicle front. Thus, even when the electric storage device 11 or DCDC converter device 12 has developed a failure as described above, it may be necessary to operate the work device 50 continuously. In this case, however, the failure in the electric storage device 11 or DCDC converter prevents the motor generator 6 from providing electric power assistance, which can hamper execution of desired work. Described below is a variation of the first embodiment as a control process that takes the above situation into account.

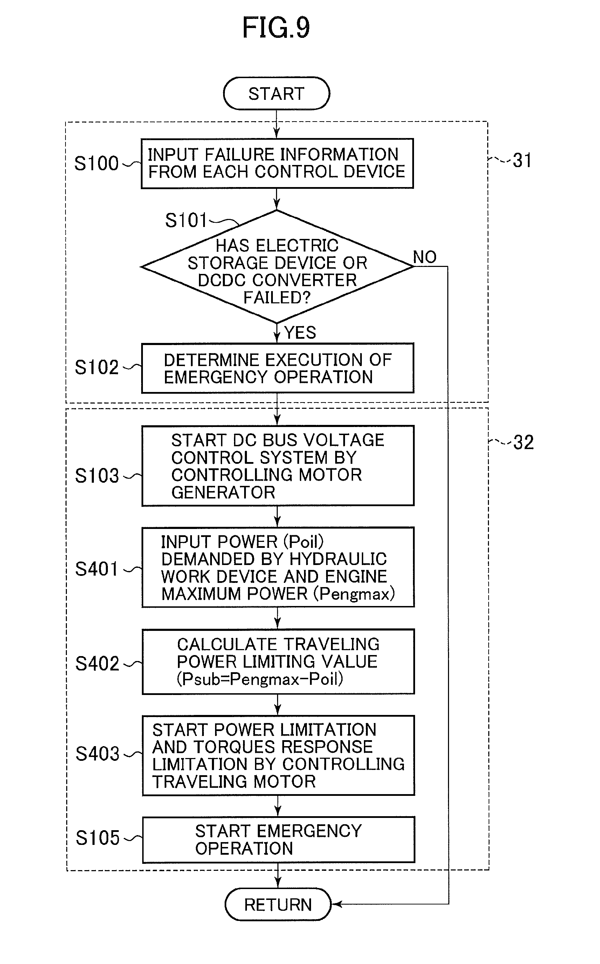

Fig. 9 is a flowchart of the process performed upon transition from the first drive method to the second drive method of the wheel loader involved in one variation of the first embodiment. In view of the situation above, this variation supplies the power of the engine 1 preferentially to the hydraulic pump 4 when power is demanded by that pump 4. That is, the hydraulic control device 21 calculates the power demanded by the work device 50 (hydraulic power: Poil), and the hybrid drive control device 20 limits the output of the traveling motor (traveling power: Prun) to a value (traveling power limiting value: Psub) obtained by extracting the hydraulic power (Poil) from the maximum output of the engine 1 (engine maximum power: Pengmax).

The flowchart shown in Fig. 9 is different from that in Fig. 8 in that the process of S104 is replaced by execution of the process of S401, S402 and S403. Also, the same steps as those in Fig 8 are given the same reference numerals, and their explanations are omitted.

In the flowchart shown in Fig. 9, upon completion of S103, the hydraulic power (Poil) calculated by the hydraulic control device 21 and the engine maximum power (Pengmax) output from the hybrid drive control device 20 are input to the emergency operation control unit 32 (S401). And the emergency operation control unit 23 performs the process of calculating the traveling power limiting value Psub for emergency operation by subtracting the hydraulic power (Poil) from the engine maximum power (Pengmax) (S402).

Next, in conjunction with the process of controlling the traveling motor 9 performed by the inverter control device 23, the emergency operation control unit 23 causes the torque response limiting unit 46 to select the torque responsiveness indicated by the broken line 73b to limit the torque responsiveness of the traveling motor 9, and limits the power Prun of the traveling motor 9 in such a manner that the upper limit of the power Prun is held below the traveling power limiting value Psub (S403). One way of holding the traveling power Prun below Psub in S403 is by getting the torque response limiting unit 4 to set the maximum torque of the traveling motor 9 based on the limited value Psub. This enables the work device 50 preferentially to proceed with work even when the electric storage device 11 or DCDC converter device 12 has developed a failure. Where excess power is available even in a case with such a failure, the vehicle can travel while performing work.

Whereas the method of prioritizing the output demanded by the work device 50 was explained in the example above, the output demanded by the traveling motor 9 may be given a priority depending on the operation of the wheel loader. In this case, the work device 50 is driven with the power left after the traveling power Prun is subtracted from the engine maximum power (Pengmax).

The second embodiment of the present invention is explained next. What is explained here is the emergency operation to be performed when the motor generator 6 or inverter device 7 has developed a failure in the traveling power supply system.

During normal time, most of the power necessary for the traveling of the vehicle is generated and supplied using the motor generator 6 and inverter device 7. Thus, when any of these devices has a failure, the supply of power from the motor generator 6 is cut off or limited, and then, it will be basically difficult for the vehicle to travel. However, as explained above in connection with the first embodiment, when the failure occurs on a public road or at a work site, the vehicle needs to be moved from that spot as soon as possible. For this reason, the emergency operation function is just as important for the second embodiment as for the first embodiment. With the second embodiment, the vehicle travels by mainly relying on the power of the electric storage device 11.

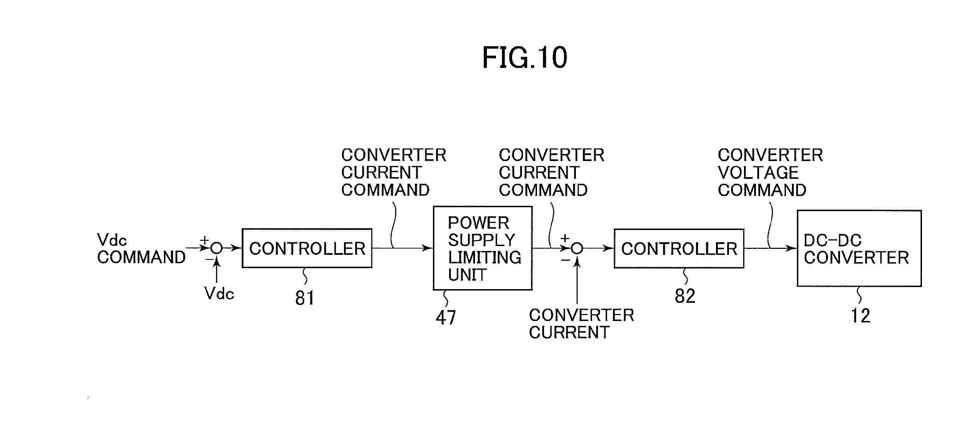

Fig. 10 is a block diagram of the process of controlling the DCDC converter device 12 performed by the converter control device 24 involved in the second embodiment of the present invention. The block diagram includes a power supply limiting unit 47. When the first drive method is used (during normal time), the power supply limiting unit 47 gives a priority to the responsiveness of the DC bus voltage and only limits the supply of power to suppress deterioration of the electric storage device 11 through overdischarge. By contrast, when the motor generator 6 or inverter device 7 has developed a failure (i.e., when the second drive method is used), the restricted amount of the power supply is larger than during normal time. Specifically, the restricted amount (to be discussed later) is calculated based on the amount of power that can be supplied to the traveling motor 9, and the power supply to the traveling motor 9 is limited based on the restricted amount of power supply. This ensures the power minimally required for the vehicle to travel, which implements the limiting of torque on the traveling motor 9 as a result.

As depicted in Fig. 10, the converter control device 24 causes a controller 81 to generate a converter current command based on the DC bus voltage command (Vdc command) input from the high-order hybrid drive control device 20, and then outputs the converter current command to the power supply limiting unit 47. Besides the Vdc command, an actual measured DC bus voltage value Vdc is input to the controller 81 to implement feedback control for generating a current command that brings the difference between the DC bus voltage command value and the actual measured value close to zero.

The power supply limiting unit 47 lowers the converter current command input from the controller 81 to a predetermined value that is output to a controller 82. In turn, the controller 82 generates a converter voltage command based on the converter current command from the power supply limiting unit 47. Besides the converter current command, an actual measured converter current value is input to the controller 82 to implement feedback control for generating a converter voltage command that brings the difference between the converter current command value and the actual measured value close to zero.

When the processing above is carried out, even if the motor generator 6 or inverter device 7 has developed a failure, the voltage on the DC bus 40 is controlled to a predetermined value, and a predetermined amount of power is further supplied to the traveling motor 9.

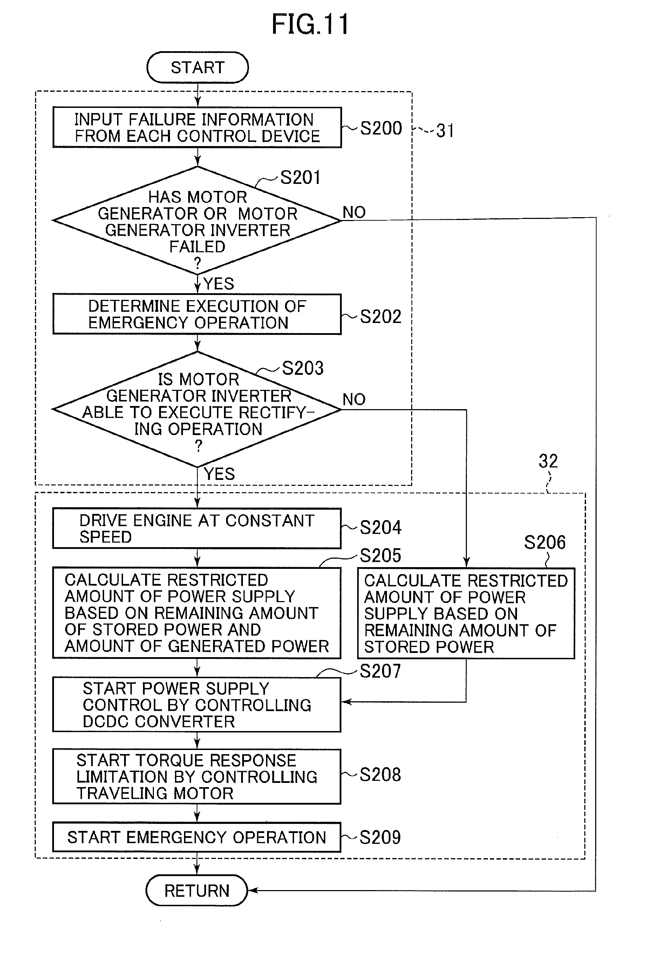

Fig. 11 is a flowchart of the process performed upon transition from the first drive method to the second drive method of the wheel loader involved in the second embodiment.

When the process shown in Fig. 11 starts, the emergency operation determination unit 31 inputs failure information on the devices constituting the traveling power supply system from the control devices 21, 22, 23, and 24 (S200). Based on the failure information input in S200, it is determined whether the motor generator 6 or inverter device 7 has developed a failure (S201). When it is determined in S201 that the devices 6 and 7 are normal, the process goes back to S200 to be repeated until a failure is detected. If it is determined in S201 that the device 6 or 7 has developed a failure on the contrary, the execution of an emergency operation is determined (S202).

When the emergency operation is determined to be executed in S202, the emergency operation determination unit 31 determines whether the inverter device 7 is able to generate rectified power when the motor generator 6 is driven by the engine 1 (S203). Whereas this embodiment has three-phase alternate a current generated by the motor generator 6, if at least one of the alternate a current can be rectified, then it is determined that the inverter device 7 is capable of generating rectified power, and the process goes forward to S204. By contrast, if it is determined in S203 that a diode failure or some other abnormality inside the inverter device 7 makes it difficult for the motor generator 6 to generate rectified power, then the process goes to S206. It should be noted that the process ranging from S200 to S203 is carried out by the emergency operation determination unit 31.

When it is determined in S203 that the generation of rectified power is possible, the avoidance operation control unit 32 drives the engine 1 at a constant revolution speed (S204). This causes the motor generator 6 to generate a predetermined amount of power. And based on the remaining amount of stored power in the electric storage device 11 and on the amount of power generated by the motor generator 6, the avoidance operation control unit 32 determines the amount by which the power supply limiting unit 47 (see Fig. 10) limits the supply of power (S205). When calculating the restricted amount of power supply, the avoidance operation control unit 32 only needs to calculate minimally required power for the vehicle to travel and the time during which the minimally required power is output (i.e., minimum travel distance guaranteed upon emergency operation). In this case, an estimated available travel distance may be calculated from the remaining amount of stored power in the electric storage device 11, from the amount of power generated by the motor generator 6 and from the above-mentioned minimally required power, and the result of the calculation may be displayed on the onboard panel 65. After the restricted amount of power supply is thus calculated, the process goes to S207.

On the other hand, when it is determined in S203 that the generation of rectified power is difficult, the avoidance operation control unit 32 calculates the restricted amount of power supply for the power supply limiting unit 47 based on the remaining amount of stored power in the electric storage device 11 (S206). The concept of calculating the restricted amount of power supply here is the same as in S205; the estimated available travel distance may be displayed on the onboard panel 65 as needed. After the restricted amount of power supply is calculated, the process goes to S207.

In S207, in conjunction with the process of controlling the DCDC converter device 12 performed by the converter control device 24, the emergency movement control unit 32 causes the power supply limiting unit 47 to operate based on the restricted amount of power supply calculated in S205 or S206. This limits the power supplied to the traveling motor 9. Furthermore, as in the process of S104 explained in connection with the first embodiment, the controller for the traveling motor 9 within the inverter control device 23 starts the torque response limiting unit 46 (see Fig. 7)(S208). The limit on response in this case should preferably be determined to ensure the longest possible continuous traveling of the vehicle in accordance with the remaining amount of stored power in the electric storage device 11, the amount of power generated by the motor generator 6, and the restricted amount of power supply calculated in S205 or S206. Upon completion of S208, the emergency operation is started (S209). This makes it possible for the vehicle to travel while the responsiveness and magnitude of the torque of the traveling motor 9 are limited more than when the first drive method is in use. Upon completion of S209, the process goes back to S200 to repeat the subsequent steps.

According to this embodiment as explained above, even when the motor generator 6 or inverter device 7 has developed a failure, the emergency operation management unit 30 supplies the traveling motor 9 with the power minimally required for the vehicle to travel while limiting the torque responsiveness of the traveling motor 9. This allows the wheel loader to travel continuously.

In some cases, this embodiment may also have to let the work device 50 operate as with the variation of the first embodiment. With this embodiment, however, the output of the traveling motor 9 is limited by the power supply limiting unit 47, and hence, the power for the work device 50 can be output as demanded. Thus, where the work device 50 is to be operated, the emergency operation only needs to be carried out likewise in accordance with the flowchart in Fig. 11.

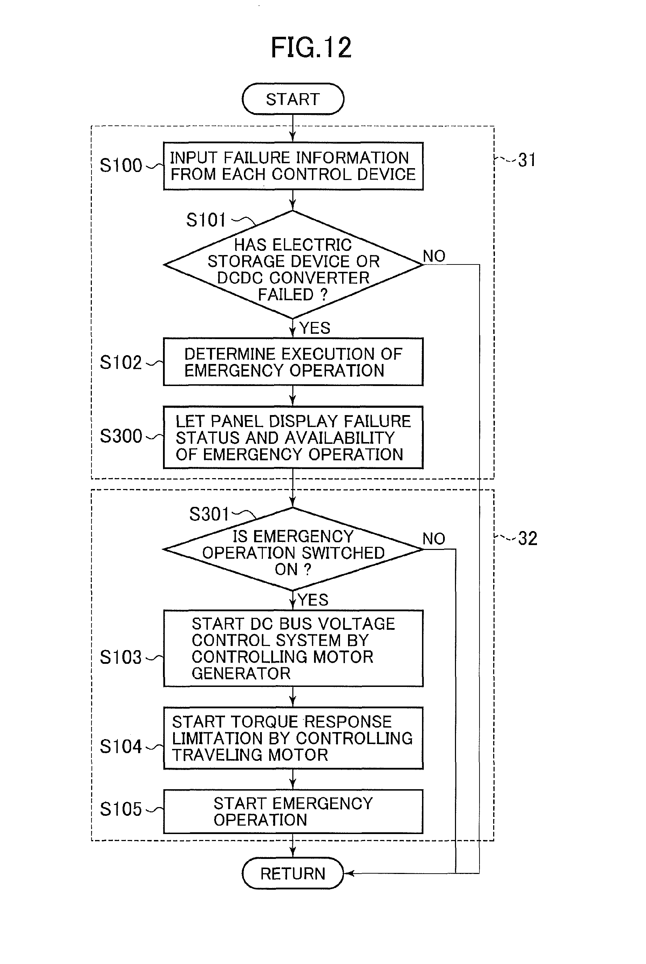

With each of the above-described embodiments, it was explained that an emergency operation is automatically performed when the emergency operation management unit 30 determines that the execution of emergency operation is possible. Alternatively, a system for allowing the operator to order the start of an emergency operation may be added (an emergency operation start ordering system). In this case, there may be provided a system for allowing the onboard panel 65 to display failure status of each of the devices making up the traveling power supply system and the availability of emergency operation (a status display system), the display being referenced when the start of an emergency operation is ordered. The flowchart shown in Fig. 12 is made of the flowchart in Fig. 8 supplemented with the steps to be performed when the emergency operation start ordering system and the status display system are installed in the wheel loader.

Fig. 12 is a flowchart of the process performed upon transition from the first drive method to the second drive method of the wheel loader involved in another variation of the first embodiment. This flowchart is different from that of Fig. 8 in that steps S300 and S301 are carried out. The same processes as those in the flowchart of Fig. 8 are given the same reference numerals, and their explanations are omitted.

When the execution of an emergency operation is determined in S102, the emergency operation determination unit 31 outputs a display signal to the onboard panel 65 causing the panel to display the status of each of the devices constituting the traveling power supply system as well as the availability of emergency operation (S300). That is, what is displayed here is the name of the device determined to have a failure based on the information input in S100 as well as the availability of an emergency operation that uses solely the normal devices in accordance with the information input in S100. This allows the operator to determine whether to start the emergency operation. Upon completion of S300, the process goes to S301.

Step S301 is a process to wait for the start of an emergency operation is awaited until the operator gives an emergency operation start order. It is determined here whether the emergency operation switch 66 is set to the "ON" position. The determination makes use of what is contained in a switch command input to the control device 200 from the switch 66. If the emergency operation switch 66 is determined to be set to the ON position, the process goes to S103, and the emergency operation is ultimately carried out. If the switch 66 is set to the OFF position, the process goes back to S100 to repeat the subsequent steps.

With the wheel loader configured as described above, the emergency operation is executed only when the operator gives the order. This makes sure the operator recognizes the emergency operation being underway. It is also possible to avoid performing unnecessary emergency operations. Furthermore, because the name of the device with a failure and the availability of emergency operation are displayed, it is possible appropriately to grasp the status of the wheel loader before deciding on the execution of an emergency operation.

According to the present invention as described above, even when part of the traveling power supply system has developed a failure, the normal devices can be supplemented with the control function necessary for carrying out an emergency operation, while the responsiveness and magnitude of the torque of the traveling motor are limited more than during normal traveling. This makes it possible to prevent the vehicle from getting stranded on the spot and to move the vehicle to a safe location.

With each of the embodiments discussed above, it was explained that the emergency operation is carried out only when any of the predetermined devices has developed a failure. Alternatively, the device that has developed a failure may be identified based on the failure information input from each of the control devices in S100 or S200 so that a different type of emergency operation may be performed in keeping with the device with the failure. That is, in the case of the flowchart of Fig. 8, if it is determined that the electric storage device 11 or converter device 12 has developed a failure based on the information from S100, the wheel loader may be configured to have step S102 and the subsequent steps carried out in the same flowchart of Fig. 8; if it is determined that the motor generator 6 or inverter device 7 has developed a failure on the basis of the information from S100, the wheel loader may be configured to have step S202 and the subsequent steps in Fig. 11 carried out.

### Description of Reference Characters

1 Engine
4 Hydraulic pump
50 Front work device
6 Motor generator (M/G)
7 M/G inverter device
8 Propeller shaft
9 Traveling motor
10 Traveling inverter device
11 Electric storage device
12 DCDC converter device
20 Hybrid drive control device
21 Hydraulic control device
22 Engine control device
23 Inverter control device
24 Converter control device
30 Emergency operation management unit
31 Emergency operation determination unit
32 Emergency operation control unit
40 DC bus
41 Smoothing capacitor
45 DC bus voltage control system
46 Torque response limiting unit
47 Power supply limiting unit
65 Onboard panel (display device)
66 Emergency operation switch
200 Control device

## Claims

1. A work vehicle comprising:
an engine;
a hydraulic pump which is driven by the engine and drives hydraulic actuators;
an electric storage device which stores direct current power;
a first and second inverter devices which convert direct current to alternate current;
a converter device which converts voltage of a circuit to which the first and second inverter devices are connected;
a motor generator which generates drive torque of the hydraulic pump using alternate current from the first inverter device;
a motor which generates drive torque of a vehicle using alternate current from the second inverter device; and
a control device which controls the first and second inverter devices, wherein
when any of devices connected to the circuit and necessary for supplying current to the motor has failure, the control device causes a normal one of the devices to perform the same process as, or a process corresponding to, a process that has been carried out by the device with the failure before the failure occurs so that the motor is driven via the second inverter device.

2. A work vehicle according to claim 1, wherein when the failure has occurred, the control device causes at least one of responsiveness and magnitude of a torque of the motor to be limited more than before the failure occurs.

3. A work vehicle according to claim 2, wherein the control device identifies which of the electric storage device, the converter device, the motor generator, and the first inverter device has the failure, and drives the motor in accordance with a drive method corresponding to the identified device with the failure.

4. A work vehicle according to claim 3, wherein
the drive method is used when either the electric storage device or the converter device has the failure, and wherein
with the drive method in use, the control device causes the first inverter device to perform a voltage conversion process carried out by the converter device.

5. A work vehicle according to claim 4, wherein
the drive method causes the torque responsiveness of the motor to be limited more than before the failure occurs, and wherein
with the drive method in use, the control device limits the torque responsiveness of the motor in a manner approaching the output response speed of the engine.

6. A work vehicle according to claim 4 or 5, wherein with the drive method in use, while the hydraulic pump demands power, the control device supplies the power of the engine preferentially to the hydraulic pump.

7. A work vehicle according to claim 3, wherein
the drive method is used when either the motor generator or the first inverter device has the failure, and wherein
with the drive method in use, the control device raises a restricted amount of a power supply to the motor, the power supply limited by the converter device in a power supply limiting process, to an amount larger than before the failure occurs.

8. A work vehicle according to claim 7, wherein with the drive method in use, the restricted amount of the power supply in the power supply limiting process is calculated based on a remaining amount of stored power in the electric storage device.

9. A work vehicle according to any of claims 1 through 8 further comprising a display device which displays status of the electric storage device, the converter device, the motor generator, and the first inverter device.

10. A work vehicle according to any of claims 1 through 9 further comprising an ordering device which allows the control device to drive the motor by getting the normal one of the devices to perform the same process as, or a process corresponding to, the process that has been carried out by the device with the failure before the failure occurs.
